# EUROPÄISCHE PATENTSCHRIFT

(11) **EP 3 165 356 B1**
(45) Veröffentlichungstag und Bekanntmachung des Hinweises auf die Patenterteilung: **13.10.2021**
(21) Anmeldenummer: 16002322.2
(22) Anmeldetag: 01.11.2016
(51) Int. Cl.: B30B 11/28, B30B 15/30, B01J 2/22, B30B 11/00

(54) **VORRICHTUNG ZUM KOMPAKTIEREN VON FASERIGEM HALMGUT**
DEVICE FOR COMPACTING FIBROUS STRAW
DISPOSITIF DESTINÉ À COMPACTER DES PRODUITS FIBREUX À TIGES

(30) Priorität: 04.11.2015 DE 102015014120
(43) Veröffentlichungstag der Anmeldung: 10.05.2017
(73) Patentinhaber: Maschinenfabrik Bernard Krone GmbH & Co. KG, 48480 Spelle (DE)
(72) Erfinder: Kalverkamp, Klemens, 49401 Damme (DE); Kalverkamp, Felix, 49401 Damme (DE); Horstmann, Josef, 49479 Ibbenbüren (DE); Lüpping, Kai, 49492 Westerkappeln (DE)

(56) Entgegenhaltungen:
- DE-A1- 4 214 111
- DE-A1-102012 017 548
- JP-A- 2001 062 280
- US-A- 3 452 393
- US-A- 4 463 430
- US-A- 5 021 940
- US-A- 5 622 037
- US-A1- 2014 259 895
- Holger zeltwanger: "CAN Newsletter December 2012", CAN Newsletter, 1. Dezember 2012 (2012-12-01), Seiten 1-62, XP002767892, Gefunden im Internet: URL:https://can-newsletter.org/uploads/med ia/raw/1fcc10a31f22959e98382f8be0c6bea9.pd f [gefunden am 2017-03-03]
- Anonym: "Premos 5000 Mobile pellet harvester", KRONE THE POWER OF GREEN , Oktober 2015 (2015-10), Seiten 1-4, XP002767893, Gefunden im Internet: URL:http://landmaschinen.krone.de/english/ products/pellet-harvester/premos-5000/ [gefunden am 2017-03-07]

## Beschreibung

Die Erfindung betrifft eine Vorrichtung zum Kompaktieren von faserigem Halmgut nach dem Oberbegriff des Anspruchs 1. Derartige Vorrichtungen werden in zunehmendem Maße in der Praxis eingesetzt, um faseriges Halmgut in der Art von Gras, Heu, Stroh oder dgl. Biomasse zu Pellets zu verarbeiten, Dabei kommen sowohl stationäre wie auch fahrbare, Im Feldeinsatz verwendbare Vorrichtungen in Betracht.

Aus der EP 2 418 075 A2 ist eine Vorrichtung zur Herstellung von Pellets aus Biomasse bekannt geworden, bei der das zu verarbeitende Rohmaterial einer Feuchtemessung unterzogen wird. Auf der Basis des dabei erfassten Gehaltes des Rohmaterials an Feuchtigkeit wird das Rohmaterial in der Vorrichtung zur Herstellung von Pellets entweder mit einer Befeuchtungseinrichtung oder mit einer Trocknungseinrichtung behandelt, damit das Rohmaterial dem Pelletierprozess mit einer vorbestimmte Feuchtegehalt zugeführt werden kann. Dieser Vorrichtung haftet der Mangel an, dass über einen vorbestimmten Feuchtegehalt vor dem Pelletierprozess keine zuverlässige Aussage darüber gemacht werden kann, wie die Qualität der Pellets nach dem Herstellungsvorgang tatsächlich ist. Die Qualität der Pellets zeigt sich im Wesentlichen daran, wie sich eine für den Jeweiligen Verwendungszweck vorgegebene Festigkeit einstellen und erreichen lässt.

In dem Dokument US 3 452 393 A ist eine Vorrichtung zur Herstellung von Pellets offenbart. Das Dokument offenbart eine Pressvorrichtung gemäß dem Oberbegriff des Anspruchs 1.

Aufgabe der Erfindung ist es daher, eine Vorrichtung zum Kompaktieren von faserigem Halmgut zu schaffen, mit der bei unterschiedlichen Materialeigenschaften des zu verarbeitenden Halmgutes Pellets mit einer gewünschten Qualität (Festigkeit) herstellbar sind.

Erfindungsgemäß wird die genannte Ausfgabe durch eine Vorrichtung zum Kompaktieren von faserigem Halmgut gemäß Anspruch 1 gelöst. Bevorzugte Ausgestaltungen der Erfindung sind Gegenstand der abhängigen Ansprüche.

Nach der Erfindung wird eine Vorrichtung zum Kompaktieren von faserigem Halmgut in der Art von Gras, Heu, Stroh oder dgl. Biomasse gemäß Anspruch 1 vorgeschlagen, mit zumindest einem Paar von Presstrommeln, die bei gegensinniger Drehbewegung zu einem Einzugstrichter für das Halmgut zusammenlaufen, in den eine Förderbahn für zuzuführendes Halmgut einmündet, mit einer Antriebsanordnung zum Antrieb der Presstrommeln sowie weiteren den Presstrommeln das Halmgut zuführenden Einrichtungen, mit einer Vorrichtung zur Zugabe von Zusatzstoffen in den auf den Einzugstrichter zulaufenden Halmgutstrom, mit einer Steuer- und Regeleinrichtung, die mit zumindest einem Sensor zur Erfassung von Prozessparametern des Kompaktiervorganges verbunden ist und die weiterhin dazu eingerichtet Ist, auf zumindest ein Stellglied zur Veränderung von zumindest einem Prozessparameter einzuwirken, wobei der zumindest eine Sensor zur Erfassung von zumindest einem Prozessparameter des Kompaktiervorganges dazu ausgebildet Ist, die während des Kompaktiervorganges an den Presstrommeln vorherrschenden Kräfte und/oder Drehmomente zu erfassen und dass die während des Kompaktiervorganges an den Presstrommeln vorherrschenden Kräfte und/oder Drehmomente als Regelgröße zur Veränderung der Förderparameter der Vorrichtung zur Zugabe von Zusatzstoffen und/oder als Regelgröße zur Veränderung der Fördermenge des auf den Einzugstrichter zulaufenden Halmgutstromes einsetzbar sind, dadurch gekennzeichnet, dass die Steuer- und Regeleinrichtung eine Datenverarbeitungseinrichtung zur Berechnung eines spezifischen Energieverbrauches aufweist, welcher sich aus dem Verhältnis der erfassten Menge des dem Einzugstrichter der Presstrommeln zugeführten Halmgutes und der aus den erfassten Drehmomenten errechenbaren Antriebsleistung der Presstrommeln ergibt und ein gewünschter spezifischer Energieverbrauch, der einer vorbestimmten Festigkeit der herzustellenden Pellets entspricht, als Sollwert in die Datenverarbeitungseinrichtung der Steuer- und Regeleinrichtung eingebbar ist.

Bei der erfindungsgemäßen Vorrichtung zum Kompaktieren von faserigem Halmgut wird in vorteilhafter Weise darauf abgestellt, dass für die Herstellung von Pellets mit hoher, gleichbleibender Qualität Prozessparameter herangezogen werden, die einen unmittelbaren Zusammenhang zu dem Kompaktiervorgang, also zu dem Einpressen des faserigen Halmgutes in die Presskanäle der Presstrommeln haben. Zu diesen Prozessparametern zählen sowohl das Drehmoment, welches zum Antrieb der Presstrommein während des Kompaktiervorganges notwendig Ist, als auch die Kräfte, die In dem Pressspalt zwischen den Presstrommeln auf diese einwirken und die Presstrommeln auseinandertreiben. Beide Prozessparameter ändern sich proportional zu dem Reibverhalten des kompaktierten Halmgutes in den Presskanälen der Presstrommeln und sind damit vorteilhaft geeignet, bei einem Regelungsprozess zur Vorgabe von unterschiedlichen Festigkeiten der herzustellenden Pellets eingesetzt zu werden. In einer vorteilhaften Ausführungsform Ist der Antriebsanordnung der Vorrichtung zum Kompaktieren von faserigem Halmgut daher ein Sensor zur Erfassung des Antriebsdrehmomentes der Presstrommeln zugeordnet, wobei es für die Bewertung dieses Prozessparameters unerheblich ist, ob dieser den Presstrommeln direkt vorgeordnet Ist oder ob er in dem zu den Presstrommeln führenden Antriebsstrang untergebracht ist. Der Sensor zur Erfassung der Kräfte, die zwischen den Presstrommeln vorherrschen ist in die Halterung der Presstrommeln zu integrieren, Ein weiterer Sensor ist dazu ausgebildet, die Fördermenge des auf den Einzugstrichter zulaufenden Halmgutstromes zu erfassen.

Zur Herstellung von Pellets aus faserigem Halmgut mit einer an unterschiedliche Verwendungen anpassbaren, gleichbleibenden Festigkeit ist es von besonderer Bedeutung, dass beim Kompaktiervorgang das Reibverhalten zwischen dem kompaktierten Halmgut (Pellet) und der Wandung der Presskanäle der Presstrommeln so geregelt wird, dass einerseits ein Festklemmen des kompaktierten Halmgutes in den Presskanälen vermieden wird und andererseits jedoch das kompaktierte Halmgut so lange unter hohem Druck im Presskanal verbleibt, dass ein sicheres und dauerhaftes Verkleben der Halmgutpartikel beim Austritt aus den Presskanälen garantiert ist. Zur zuverlässigen Durchführung dieser Prozesse können dem Halmgut vor dem Kompaktiervorgang Zusatzstoffe zugegeben werden. Als mögliche Zusatzstoffe in flüssiger Form kennt man Wasser, Melasse oder auch pflanzliche Öle, die auf das zu verarbeitende Halmgut vor dem Kompaktiervorgang in einer vorbestimmten Menge aufgebracht werden. Weiterhin sind auch pulverisierte Bindemittel als Zusatzstoffe bekannt, die dem Halmgut zugegeben werden können, um die klebende Wirkung der Halmgutpartikel untereinander zu verbessern. Eine geregelte Zugabe von Zusatzstoffen ist also eine Grundvoraussetzung zur Durchführung einer wirtschaftlichen Herstellung von Pellets aus faserigem Halmgut.

Nach der Erfindung umfasst die Vorrichtung zum Kompaktieren eine Steuer- und Regeleinrichtung, welche während des Kompaktierens ständig Messwerte zumindest von dem erforderlichen Drehmoment zum Antrieb der Presstrommeln und von Fördermenge des auf den Einzugstrichter der Presstrommeln zulaufenden Halmgutstromes erfasst. In der Regel wird bei einer Drehmomentmessung auch die Antriebsdrehzahl erfasst, so dass mittels einer Datenverarbeitungseinrichtung der Steuer- und Regeleinrichtung aus den Messwerten ein spezifischer Energleverbrauch der Vorrichtung zum Kompaktieren von faserigem Halmgut ermittelt werden kann. Dieser spezifische Energieverbrauch ist ein Wert, bei dem eine Leistungsangabe (kW) zu einer Durchsatz-angabe (to/h) in Relation gesetzt ist und die Maßeinheit kWh/to trägt. Beispielsweise kann der spezifische Energieverbrauch beim Kompaktiervorgang in einem Bereich von 60 bis 70 kwh/to liegen. Die entscheidende Erkenntnis des Erfindungsgegenstandes liegt jedoch darin, dass anhand der Vorgabe des spezifischen Energieverbrauches eine zutreffende Voraussetzung vorliegt, um eine gewünschte Festigkeit des kompaktierten Halmgutes (Pellets) nach dem Kompaktiervorgang erreichen zu können. Mit der Nutzung des spezifischen Energieverbrauches als Regelgröße zur Bestimmung der Ausbringmenge an Zusatzstoffen, die dem in den Einzugstrichter der Presstrommeln zulaufenden Halmgutstrom zu zugeben sind, ist in der Steuer- und Regeleinrichtung eine vorteilhafte Strategie zur Regelung eines wirtschaftlichen Kompaktiervorganges hinterlegt.

In einer vorteilhaften Ausführungsform ist die Steuer- und Regeleinrichtung dazu eingerichtet, dass der Maschinenbediener eine gewünschte Festigkeit der herzustellenden Pellets als Sollwert eingibt. Während des Kompaktlervorganges Ist es nun vorgesehen, dass anhand der erfassten Messwerte von der Datenverarbeitungseinrichtung der Steuer- und Regeleinrichtung der spezifische Energieverbrauch als Istwert ermittelt wird. Belm anschließenden Vergleich zwischen dem Sollwert und dem Istwert wird ermittelt, ob der Kompaktiervorgang zu leicht- oder zu schwergängig ist. Wenn die Differenz zwischen dem Istwert und dem Sollwert positiv ist, verläuft der Kompaktiervorgang zu leichtgängig ab, so dass dem zu kompaktierenden Halmgut eine größere Menge von dem festigkeitsfördernden Zusatzstoff zu zugeben ist. Wenn die Differenz zwischen dem istwert und dem Sollwert allerdings negativ ausfällt, so ist die Zugabe von Zusatzstoffen zu reduzieren. Über die Auswahl der Zusatzstoffe aus mehreren Optionen eröffnet sich eine weitere Möglichkeit, die Leicht- bzw. Schwergängigkeit des Kompaktiervorganges zu beeinflussen. Im Falle eines zu schwergängigen Kompaktiervorganges erleichtert die Zugabe von Pflanzenöl auf das zu kompaktierende Halmgut den Kompaktiervorgang. Im umgekehrten Fall erhöht die Zugabe einer erhöhten Menge an Wasser die Festigkeit, so dass der Kompaktiervorgang schwergängiger abläuft. Durch die Zugabe von Melasse eröffnet sich die Möglichkeit, den Kompaktiervorgang In der Weise zu fördern, dass durch die Zugabe dieses Zusatzstoffes der Gehalt an klebendem Bindemittel (Lignin) verbessert wird. Eine entsprechende Wirkung wird auch durch die Zugabe von pulverisiertem Ligninsulfonat erreicht.

In einer vorteilhaften Ausbildung der Erfindung erfolgt die Zugabe von Zusatzstoffen in flüssiger Form. Über eine gestaffelte Anordnung von Düsen im Bereich vor den Presswalzen der Vorrichtung zum Kompaktieren von faserigem Halmgut kann dem Halmgut Wasser, Melasse, Öl oder dgl. Zusatzstoffe zugeführt werden. Die Düsen der Vorrichtung zur Zugabe von Zusatzstoffen sind dabei in Bezug auf die erreichbaren Volumenströme so eingestellt, dass jede Düse einen unterschiedlichen Volumenstrom liefert. Durch die Ansteuerung einer oder einer Kombination von mehreren Düsen durch die Steuer- und Regeleinrichtung kann dann nahezu jede von der Steuer- und Regeleinrichtung ermittelte Ausbringmenge an Zusatzstoffen realisiert werden. Neben der Dosierung der Ausbringmenge wird von der Steuer- und Regeleinrichtung in erfinderischen Weise auch die Auswahl der zu zugebenden Flüssigkeit getroffen. Aus einer Option von zumindest zwei Vorratsbehältern kann die Entnahme einer vorbestimmten Menge eines Zusatzstoffes gesteuert von der Steuer- und Regeleinrichtung eingeleitet werden. An der Vorrichtung zum Kompaktieren von faserigem Halmgut sind in vorteilhafter Weise vier Düsen zur Zugabe von flüssigen Zusatzstoffen angeordnet. In einem Bereich unmittelbar vor den Presswalzen befinden sich zwei Düsen, die flüssige Zusatzstoffe auf das in den Einzugstrichter einlaufende Halmgut aufbringen. Zwei weitere Düsen befinden sich oberhalb eines Bereiches der Erntemaschine, in dem das zu kompaktierende Halmgut durch eine Aufnahmevorrichtung vom Erdboden aufgenommen wird. Durch die Wirkung der Steuer- und Regeleinrichtung werden die Düsen entsprechend ihrem voreingestellten Volumenstrom angesteuert, so dass die rechnerisch ermittelte, benötigte Menge an flüssigen Zusatzstoffen möglichst genau erreicht wird, aber nicht übertroffen werden kann. Wird aufgrund der von der Steuer- und Regeleinrichtung ausgewählten Düsen die rechnerisch ermittelte Aufbringmenge an flüssigen Zusatzstoffen nicht ganz erreicht, so kann der fehlende Differenzbetrag bei dem nächsten Regelungsintervall aufaddiert und damit zusätzlich zugegeben werden. Unabhängig von der vorstehend beschriebenen Ausgestaltung der Vorrichtung zur Zugabe von Zusatzstoffen ist es auch vorstellbar, dass beim Aufbringen der flüssigen Zusatzstoffe Düsen Verwendung finden, die im Hinblick auf die erreichbare Aufbringmenge auf veränderliche Volumenströme einstellbar sind.

In einer vorteilhaften Weiterbildung der Erfindung ist es vorstellbar, dass der Vorrichtung zum Kompaktieren von faserigem Halmgut auch ein Sensor zugeordnet ist, welcher die Feuchtigkeit des vom Erdboden aufgenommenen Halmgutes ermittelt. Die Berücksichtigung bzw. die Verarbeitung dieser Information über unterschiedliche Feuchtigkeitsbereiche im aufgenommenen Halmgutschwad stellen eine Optimierung des Regelungsprozesses in Aussicht, in dem beispielsweise bei einer feuchteren Stelle im Schwad diese detektiert werden kann und als Reaktion darauf die aufzubringende Menge an Wasser reduziert werden kann.

In einer weiteren vorteilhaften Ausführungsform der Erfindung kann es vorgesehen sein, dass die Vorrichtung zum Kompaktieren von faserigem Halmgut als Kombination mit einer landwirtschaftlichen Zug- und Antriebsmaschine ausgeführt sein kann, wobei die landwirtschaftliche Zug- und Antriebsmaschine und die Vorrichtung zum Kompaktieren über eine Datenverbindung in der Art einer Isobus- oder Can-Busverbindung miteinander verbunden sind. Über diese Datenverbindung können Daten, die von der Steuer- und Regeleinrichtung der Vorrichtung zum Kompaktieren ermittelt worden sind, der landwirtschaftlichen Zug- und Antriebsmaschine zugeführt werden und dort zur Steuerung verschiedenster Parameter verwendet werden. Umgekehrt können über die Datenverbindung auch Parameter der landwirtschaftlichen Zug- und Antriebsmaschine an die Vorrichtung zum Kompaktieren übertragen werden und damit dann bei der Steuerung der Vorrichtung zum Kompaktieren Anwendung finden. Durch die eingerichtete Datenverbindung ist es dann möglich, dass die Steuer- und Regeleinrichtung der Vorrichtung zum Kompaktieren als Regelgröße auf Auslastungskennwerte der landwirtschaftlichen Zug- und Antriebsmaschine zugreift und diese dem Regelungsprozess zugrunde legt. Für den Fall einer Nutzung der Vorrichtung zum Kompaktieren als mobile Emtemaschine kann es weiterhin vorgesehen sein, dass eine Veränderung bzw. Regulierung des auf den Einzugstrichter der Presstrommeln zulaufenden Halmgutstromes in Abhängigkeit von der Fahrgeschwindigkeit erfolgt, wobei abhängig von einem Prozessparameter des Kompaktiervorganges von der Steuer- und Regeleinrichtung der Vorrichtung zum Kompaktieren ein Signal an die landwirtschaftliche Zug- und Antriebsmaschine weitergeleitet wird, das der Veränderung der Fahrgeschwindigkeit dann zugrunde gelegt werden kann.

Nachfolgend wird ein vorteilhaftes Ausführungsbeispiel der Erfindung anhand einer Zeichnung beschrieben. In der Zeichnung zeigt:
- Fig. 1:: eine Perspektivansicht einer Vorrichtung zum Kompaktieren von faserigem Halmgut gemäß der Erfindung;

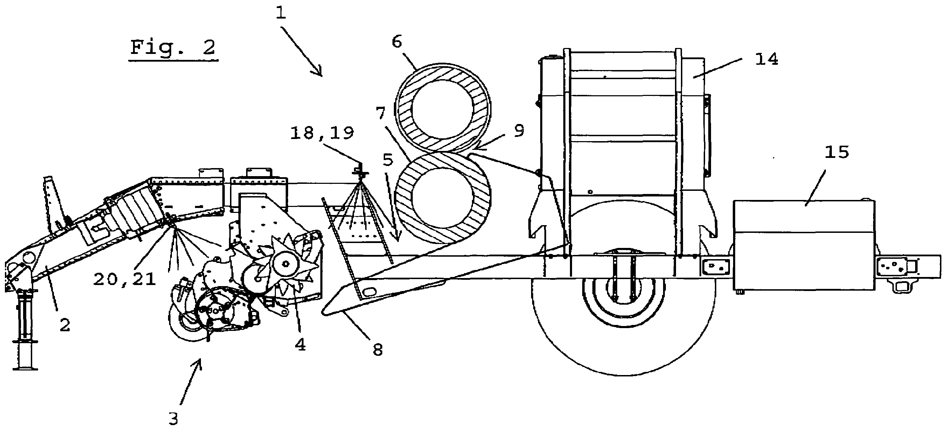

- Fig. 2:: eine Schnittdarstellung der Vorrichtung zum Kompaktieren nach Fig.1, wobei der Schnittverlauf entlang einer in Fahrt- und Arbeitsrichtung gerichteten, vertikalen Längsmlttelebene geführt ist;
- Fig. 3;: ein Blockschaltbild einer Vorrichtung zur Zugabe von Zusatzstoffen;
- Fig. 4:: ein Blockschaltbild einer Steuerung der Vorrichtung zum Kompaktieren;

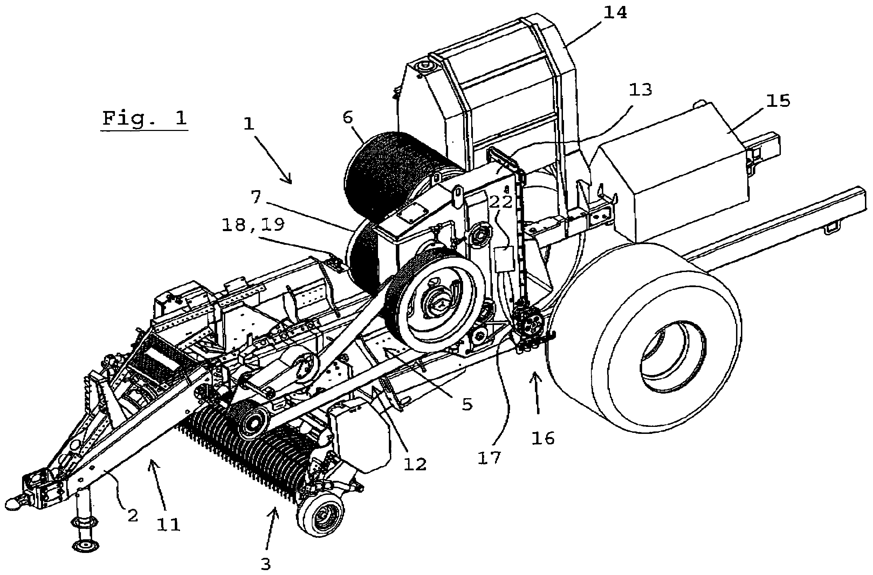

Aus der Fig. 1 ist eine Vorrichtung 1 zum Kompaktieren von faserigem Halmgut in der Art von Gras, Heu, Stroh oder dgl. Biomasse mit ihren funktionswesentlichen Baugruppen näher veranschaulicht. In ihrem vorderen Bereich weist die Vorrichtung 1 zum Kompaktieren eine Deichsel 2 auf, mit der diese an Anhängevorrichtungen einer landwirtschaftlichen Zug- und Antriebsmaschine angehängt und über die Feld- oder Wiesenfläche bewegt werden kann. In einer Weiterbildung kann die Vorrichtung 1 zum Kompaktieren auch als eine selbstfahrende Arbeitsmaschine ausgebildet sein.

Zur Aufnahme des in der Regel in Schwaden angeordneten, faserigen Halmgutes vom Erdboden weist die Vorrichtung 1 zum Kompaktieren in einem der Deichsel 2 nachgeordneten Bereich eine Aufnahmeeinrichtung 3 auf, die das Halmgut über eine nachgeordnete Fördertrommel 4 sowie einer Förderbahn 5 den Presstrommeln 6,7 zufördert. Die den Presstrommeln 6,7 vorgeschaltete Förderbahn 5 ist dazu so gestaltet, dass der vordere Bereich der Förderbahn 5 einen nach oben hin offenen Bereich ausbildet und in ihrem hinteren Bereich an der Außenkontur der unteren Presstrommel 7 geführt ist. Dazu besteht die Förderbahn 5 aus einem Förderband 8, welches die untere Presstrommel 7 in einem Teilbereich umschlingt und an der hinteren Seite der übereinander angeordneten Presstrommeln 6,7 einen Einzugstrichter 9 ausbildet, über den das zu kompaktierende Halmgut in den Pressspalt zwischen den beiden Presstrommeln 6,7 eingeführt wird. Zum Antrieb der Presstrommeln 6,7 ist eine Antriebsanordnung 10 vorgesehen, welche im Wesentlichen aus einer Eingangsgetriebeeinheit 11, einem Riementrieb 12 und aus einem Presstrommelgetriebe 13 besteht.

Zur Herstellung der Pellets sind die Presstrommeln 6,7 mit einer Vielzahl von Presskanälen versehen, die sich von der Oberfläche der Presstrommeln 6,7 radial nach innen erstrecken und in einem inneren Hohlraum der Presstrommeln 6,7 münden. In den Einzugstrichter 9 der Presstrommeln 6,7 eingeführtes Halmgut wird daher beim Einziehen in den Pressspalt zwischen den Presstrommeln 6,7 nachfolgend in die Presskanäle hineingepresst und dabei zu Pellets geformt. Für einen funktionssicheren Ablauf dieser Vorgänge ist es erforderlich, auf das zu kompaktierende Halmgut Zusatzstoffe aufzubringen, die zu einer zuverlässigen Steuerung der Festigkeit und damit der Qualität beitragen, In der Hauptsache werden als Zusatzstoffe Wasser und pflanzliche Öle eingesetzt. Die Vorrichtung 1 zum Kompaktieren ist daher mit einem Vorratsbehälter 14 zur Aufnahme von Wasser sowie zumindest einem weiteren Vorratsbehälter 15 zur Aufnahme von Öl ausgestattet. Über eine Anordnung 16 zur Zugabe von flüssigen Zusatzstoffen wie Wasser, Öl oder Melasse können diese gesteuert nach Auswahl und Ausbringmenge auf das faserige, zu kompaktierende Halmgut aufgebracht werden. Die Anordnung 16 zur Zugabe der flüssigen Zusatzstoffe verfügt dazu über eine Pumpe 17 und Düsen 18,19,20,21, wobei die Pumpe 17 sowie die Düsen 18,19,20,21 über Leitungen untereinander und mit den Vorratsbehältern 14,15 verbunden sind. Die Düsen 18,19 befinden sich in einem Bereich unmittelbar vor den Presstrommeln 6,7 und können somit von oben auf das faserige Halmgut einwirken, welches auf der Förderbahn 5 auf den Einzugstrichter 9 zugefördert wird. Die weiteren Düsen 20,21 sind oberhalb von der Aufnahmeeinrichtung 3 angeordnet und sind daher dazu geeignet, das gerade vom Erdboden aufgenommene Halmgut mit flüssigen Zusatzstoffen zu benetzen, Zur Steuerung und Regelung der Abläufe ist der Vorrichtung 1 zum Kompaktieren eine Steuer- und Regeleinrichtung 22 zugeordnet.

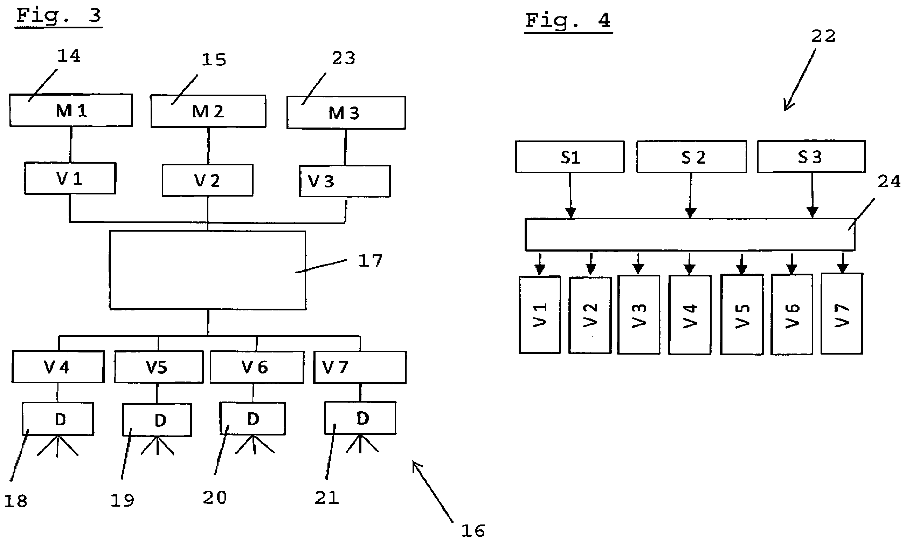

Fig. 3 zeigt eine schematische Darstellung der Anordnung 16 zur Zugabe von flüssigen Zusatzstoffen, wobei in dem Blockschaltbild Vorratsbehälter 14,15 angedeutet sind, die mit dem Medium M1 (Wasser) und mit dem Medium M2 (Öl) befüllt sein können. Ein weiterer Vorratsbehälter 23 könnte für die Zugabe des Mediums M3 in Form von Melasse vorgesehen sein. Wie aus dem Blockschaltbild weiterhin hervorgeht, enthalten die von den Vorratsbehältern 14,15,23 zur Pumpe 17 führenden Leitungen jeweils eine Ventileinheit V1 bis V3, die für eine Ansteuerung durch die Steuer- und Regeleinrichtung 22 vorgesehen sind. Im unteren Teil des Blockschaltbildes sind vier Düsen 18,19,20,21 angeordnet, welche ebenfalls über jeweils eine Ventileinheit V4 bis V7 mit der Pumpe 17 verbunden sind. Auch hier dienen die Ventileinheiten V4 bis V7 der Ansteuerung durch die Steuer- und Regeleinrichtung 22. Im Hinblick auf die Ausbringmenge der Düsen 18,19,20,21 der Anordnung 16 zur Zugabe von flüssigen Zusatzstoffen ist der erreichbare Volumenstrom einer jeden Düse 18,19,20,21 so ausgelegt, dass jede Düse 18,19,20,21 einen unterschiedlichen Volumenstrom (beispielsweise 1, 2, 4, 8 kg/min) liefert. Durch die Ansteuerung einer oder einer Kombination von mehreren Düsen 18,19,20,21 ergibt sich damit eine kostengünstige Lösung zur Realisierung nahezu jeder von der Steuer- und Regeleinrichtung 22 errechneten Ausbringmenge an flüssigen Zusatzstoffen.

Aus Fig. 4 ist im Rahmen eines weiteren Blockschaltbildes der schematische Aufbau einer Steuer- und Regeleinrichtung 22 ersichtlich, deren zentraler Teil aus einer Datenverarbeitungseinrichtung 24 besteht. Als Eingangsgrößen sind der Datenverarbeitungseinrichtung 24 Sensoren S1, S2, S3 zugeordnet, die der Erfassung von zumindest einem Prozessparameter des Kompaktiervorganges dienen. Ein erster Sensor kann dabei für die Erfassung der während des Kompaktiervorganges an den Presstrommeln 6,7 vorherrschenden Kräfte und/oder Drehmomente vorgesehen sein. Zur Ermittlung des auf den Einzugstrichter 9 der Presstrommeln 6,7 zulaufenden Halmgutstromes kann der zweite Sensor S2 eingesetzt sein. Weitere Prozessparameter wie etwa die Antriebsdrehzahl der Presstrommeln 6,7 oder etwa die Feuchtigkeit des durch die Aufnahmeeinrichtung 3 aufgenommenen Halmgutes können Parameter sein, die zur Steuerung des Kompaktiervorganges bzw. zur Steuerung der Ausbringmenge der Anordnung 16 zur Zugabe von flüssigen Zusatzstoffen von Bedeutung sind. Die mit Hilfe der Sensoren S1, S2, S3 erfassten Daten dienen der Datenverarbeitungseinrichtung 24 als Grundlage zur rechnerischen Bestimmung der Ausbringmenge an flüssigen Zusatzstoffen, die zur Herstellung von Pellets mit exakt an den Verwendungszweck angepassten Festigkeitseigenschaften erforderlich sind. Nach der Ermittlung der jeweils erforderlichen Ausbringmenge an flüssigen Zusatzstoffen ist die Datenverarbeitungseinrichtung 24, der Steuer- und Regeleinrichtung dazu eingerichtet, über die Ventileinheit V4 bis V7 eine Kombination der Düsen 18,19,20,21 anzusteuern, damit das den Presstrommeln 6,7 zugeförderte Halmgut mit der erforderlichen Ausbringmenge an flüssigen Zusatzstoffen benetzt wird.

## Patentansprüche

1. Vorrichtung (1) zum Kompaktieren von faserigem Halmgut in der Art von Gras, Heu, Stroh oder dgl. Biomasse mit zumindest einem Paar von Presstrommeln (6,7), die bei gegensinniger Drehbewegung zu einem Einzugstrichter (9) für das Halmgut zusammenlaufen, in den eine Förderbahn für zuzuführendes Halmgut einmündet, mit einer Antriebsanordnung zum Antrieb der Presstrommeln (6,7) sowie weiteren den Presstrommeln (6,7) das Halmgut zuführenden Einrichtungen, mit einer Vorrichtung (16) zur Zugabe von Zusatzstoffen in den auf den Einzugstrichter (9) zulaufenden Halmgutstrom, mit einer Steuer- und Regeleinrichtung (22), die mit zumindest einem Sensor zur Erfassung von Prozessparametern des Kompaktiervorganges verbunden ist und die weiterhin dazu eingerichtet ist, auf zumindest ein Stellglied zur Veränderung von zumindest einem Prozessparameter einzuwirken, wobei der zumindest eine Sensor (S1, S2, S3) zur Erfassung von zumindest einem Prozessparameter des Kompaktiervorganges dazu ausgebildet ist, die während des Kompaktiervorganges an den Presstrommeln (6,7) vorherrschenden Kräfte oder Drehmomente zu erfassen und wobei die während des Kompaktiervorganges an den Presstrommeln (6,7) vorherrschenden Kräfte oder Drehmomente als Regelgröße zur Veränderung von Förderparametern der Vorrichtung (16) zur Zugabe von Zusatzstoffen und/oder als Regelgröße zur Veränderung der Fördermenge des auf den Einzugstrichter (9) zulaufenden Halmgutstromes einsetzbar sind, **dadurch gekennzeichnet, dass** die Steuer- und Regeleinrichtung (22) eine Datenverarbeitungseinrichtung (24) zur Berechnung eines spezifischen Energieverbrauches aufweist, welcher sich aus dem Verhältnis der erfassten Menge des dem Einzugstrichter (9) der Presstrommeln (6,7) zugeführten Halmgutes und der aus den erfassten Drehmomenten errechenbaren Antriebsleistung der Presstrommeln (6,7) ergibt und ein gewünschter spezifischer Energieverbrauch, der einer vorbestimmten Festigkeit der herzustellenden Pellets entspricht, als Sollwert in die Datenverarbeitungseinrichtung (24) der Steuer- und Regeleinrichtung (22) eingebbar ist.

2. Vorrichtung nach Anspruch 1, **dadurch gekennzeichnet, dass** der zumindest eine Sensor (S1, S2, S3) zur Erfassung von Prozessparametern des Kompaktiervorganges dazu ausgebildet ist, die während des Kompaktiervorganges zwischen den Presstrommeln (6,7) vorherrschenden Kräfte zu erfassen.

3. Vorrichtung nach Anspruch 1, **dadurch gekennzeichnet, dass** der zumindest eine Sensor (S1, S2, S3) zur Erfassung von Prozessparametern des Kompaktiervorganges dazu geeignet ist, die während des Kompaktiervorganges zum Antrieb der Presstrommeln (6,7) erforderlichen Drehmomente zu erfassen.

4. Vorrichtung nach zumindest einem der Ansprüche 1 bis 3, **dadurch gekennzeichnet, dass** als Zusatzstoffe zur Zugabe in den auf den Einzugstrichter (9) zulaufenden Halmgutstrom Flüssigkeiten, wie Wasser, Melasse oder Öl vorgesehen sind.

5. Vorrichtung nach zumindest einem der Ansprüche 1 bis 3, **dadurch gekennzeichnet, dass** als Zusatzstoffe zur Zugabe in den auf den Einzugstrichter (9) zulaufenden Halmgutstrom pulverisierte Bindemittel einsetzbar sind.

6. Vorrichtung nach zumindest einem der Ansprüche 4 oder 5, **dadurch gekennzeichnet, dass** die Menge an Zusatzstoffen zur Zugabe in den auf den Einzugstrichter (9) zulaufenden Halmgutstrom abhängig von der Menge des den Presstrommeln (6,7) zuzuführenden Halmgutes ist.

7. Vorrichtung nach zumindest einem der Ansprüche 1 bis 6, **dadurch gekennzeichnet, dass** die Menge des dem Einzugstrichter (9) der Presstrommeln (6,7) zuzuführenden Halmgutes in einem Bereich vor dem Einzugstrichter (9) der Presstrommeln (6,7) erfasst wird.

8. Vorrichtung nach zumindest einem der Ansprüche 1 bis 7, **dadurch gekennzeichnet, dass** die Vorrichtung (16) zur Zugabe von Zusatzstoffen in flüssiger Form in den auf den Einzugstrichter (9) zulaufenden Halmgutstrom Düsen aufweist, die auf veränderliche Volumenströme einstellbar sind.

9. Vorrichtung nach zumindest einem der Ansprüche 1 bis 7, **dadurch gekennzeichnet, dass** die Vorrichtung (16) zur Zugabe von Zusatzstoffen in flüssiger Form in den auf den Einzugstrichter (9) zulaufenden Halmgutstrom eine gestaffelte Anordnung von Düsen (18,19,20,21) aufweist, wobei jede Düse (18,19,20,21) auf einen unterschiedlichen Volumenstrom eingestellt ist.

10. Vorrichtung nach Anspruch 9, **dadurch gekennzeichnet, dass** die Vorrichtung (16) zur Zugabe von Zusatzstoffen in flüssiger Form in den auf den Einzugstrichter (9) zulaufenden Halmgutstrom eine gestaffelte Anordnung von Düsen (18,19,20,21) aufweist, wobei eine oder mehrere Düsen (18,19,20,21) entsprechend dem geforderten Volumenstrom ansteuerbar sind.

11. Vorrichtung nach einem der Ansprüche 9 oder 10, **dadurch gekennzeichnet, dass** die Vorrichtung (16) zur Zugabe von Zusatzstoffen in flüssiger Form zumindest zwei Vorratsbehälter (14,15,23) aufweist, die in einer Parallelschaltung mit einer Pumpe (17) verbunden sind.

12. Vorrichtung nach zumindest einem der Ansprüche 9 bis 11, **dadurch gekennzeichnet, dass** über die Steuer- und Regeleinrichtung (22) eine Ansteuerung der Pumpe (17) zur Zugabe von Zusatzstoffen in flüssiger Form erreichbar ist, wobei in Abhängigkeit von dem zumindest einen Prozessparameter des Kompaktiervorganges alternativ aus einem der zumindest zwei Vorratsbehälter (14,15,23) eine vorbestimmte Ausbringmenge des Zusatzstoffes in flüssiger Form der gestaffelte Anordnung von Düsen (18,19,20,21) zuführbar ist.

13. Vorrichtung nach Anspruch 12, **dadurch gekennzeichnet, dass** über die Steuer- und Regeleinrichtung (22) eine Ansteuerung der Pumpe (17) zur Zugabe von Zusatzstoffen in flüssiger Form erreichbar ist, bei der die Ausbringmenge des Zusatzstoffes in flüssiger Form in Abhängigkeit von dem zumindest einen Prozessparameter des Kompaktiervorganges vorbestimmt ist.

14. Vorrichtung nach Anspruch 1, **dadurch gekennzeichnet, dass** die Datenverarbeitungseinrichtung (24) der Steuer- und Regeleinrichtung (22) dazu eingerichtet ist, den Sollwert des vorgegebenen spezifischen Energieverbrauches mit dem erfassten spezifischen Energieverbrauch zu vergleichen und in Abhängigkeit von diesem Ergebnis eine Ansteuerung der Vorrichtung (16) zur Zugabe von Zusatzstoffen einzuleiten.

15. Vorrichtung nach Anspruch 1, **dadurch gekennzeichnet, dass** die Vorrichtung in Kombination mit einer landwirtschaftlichen Zug- und Antriebsmaschine ausführbar ist, wobei die Steuer- und Regeleinrichtung (22) dazu eingerichtet ist, über eine Datenverbindung einen Auslastungskennwert der landwirtschaftlichen Zug- und Antriebsmaschine aufzunehmen und dieser Auslastungskennwert als Regelgröße zur Veränderung von Förderparametern der Vorrichtung (16) zur Zugabe von Zusatzstoffen und/oder als Regelgröße zur Veränderung der Fördermenge des auf den Einzugstrichter (9) zulaufenden Halmgutstromes einsetzbar ist.

16. Vorrichtung nach Anspruch 15, **dadurch gekennzeichnet, dass** eine Veränderung der Fördermenge des auf den Einzugstrichter (9) zulaufenden Halmgutstromes über eine Veränderung der Fahrgeschwindigkeit der Zug- und Antriebsmaschine erreichbar ist.

17. Vorrichtung nach Anspruch 15 und 16, **dadurch gekennzeichnet, dass** eine Veränderung der Fördermenge des auf den Einzugstrichter (9) zulaufenden Halmgutstromes über eine Veränderung der Fahrgeschwindigkeit der Zug- und Antriebsmaschine erreichbar ist, wobei diese Veränderung von der Steuer- und Regeleinrichtung (22) in Abhängigkeit von einem Prozessparameter des Kompaktiervorganges einleitbar ist.

## Claims

1. Apparatus (1) for compacting fibrous stalk material in the form of grass, hay, straw or similar biomass, the apparatus comprising at least one pair of press drums (6, 7) which, while rotating in opposite directions, converge to a feed hopper (9) for the stalk material, into which hopper a conveyor track for the straw material to be supplied leads, comprising a drive arrangement for driving the press drums (6, 7) as well as further devices that supply the straw material to the press drums (6, 7), comprising an apparatus (16) for adding additives into the flow of straw material flowing towards the feed hopper (9), comprising an open-loop and closed-loop control device (22) which is connected to at least one sensor for detecting process parameters of the compacting process and which is also configured to act on at least one actuator in order to change at least one process parameter, the at least one sensor (S1, S2, S3) for detecting at least one process parameter of the compacting process being designed to detect the forces or torques prevailing on the press drums (6, 7) during the compacting process, and it being possible for the forces or torques prevailing on the press drums (6, 7) during the compacting process to be used as a controlled variable for changing the conveying parameters of the apparatus (16) for adding additives and/or to be used as a controlled variable for changing the conveying rate of the flow of stalk material flowing towards the feed hopper (9), **characterised in that** the open-loop and closed-loop control device (22) has a data processing device (24) for calculating a specific energy consumption which is derived from the ratio of the detected amount of the straw material supplied to the feed hopper (9) of the press drums (6, 7) and the drive power of the press drums (6, 7) that can be calculated from the detected torques, and a desired specific energy consumption, which corresponds to a predetermined strength of the pellets to be produced, can be entered as a setpoint into the data processing device (24) of the open-loop and closed-loop control device (22).

2. Apparatus according to claim 1, **characterised in that** the at least one sensor (S1, S2, S3) for detecting process parameters of the compacting process is designed to detect the forces prevailing between the press drums (6, 7) during the compacting process.

3. Apparatus according to claim 1, **characterised in that** the at least one sensor (S1, S2, S3) for detecting process parameters of the compacting process is suitable for detecting the torques required to drive the press drums (6, 7) during the compacting process.

4. Apparatus according to at least one of claims 1 to 3, **characterised in that** liquids, such as water, molasses or oil, are provided as additives to be added to the flow of straw material flowing towards the feed hopper (9).

5. Apparatus according to at least one of claims 1 to 3, **characterised in that** pulverised binding agents can be used as additives to be added to the flow of stalk material flowing towards the feed hopper (9).

6. Apparatus according to at least one of claims 4 or 5, **characterised in that** the amount of additives to be added to the flow of straw material flowing towards the feed hopper (9) depends on the amount of straw material to be supplied to the press drums (6, 7).

7. Apparatus according to at least one of claims 1 to 6, **characterised in that** the amount of straw material to be supplied to the feed hopper (9) of the press drums (6, 7) is detected in a region upstream of the feed hopper (9) of the press drums (6, 7).

8. Apparatus according to at least one of claims 1 to 7, **characterised in that** the apparatus (16) for adding additives in liquid form to the flow of straw material flowing towards the feed hopper (9) has nozzles which can be set to variable volume flow rates.

9. Apparatus according to at least one of claims 1 to 7, **characterised in that** the apparatus (16) for adding additives in liquid form to the flow of stalk material flowing towards the feed hopper (9) has a staggered arrangement of nozzles (18, 19, 20, 21), each nozzle (18,19,20,21) being set to a different volume flow rate.

10. Apparatus according to claim 9, **characterised in that** the apparatus (16) for adding additives in liquid form to the flow of stalk material flowing towards the feed hopper (9) has a staggered arrangement of nozzles (18, 19, 20, 21), it being possible for one or more nozzles (18, 19, 20, 21) to be controlled according to the required volume flow rate.

11. Apparatus according to either claim 9 or claim 10, **characterised in that** the apparatus (16) for adding additives in liquid form has at least two storage containers (14, 15, 23) which are connected in parallel to a pump (17).

12. Apparatus according to at least one of claims 9 to 11, **characterised in that** the open-loop and closed-loop control device (22) can be used to control the pump (17) for adding additives in liquid form, it being possible for a predetermined discharge amount of the additive in liquid form to be supplied from either one of the at least two storage containers (14, 15, 23) to the staggered arrangement of nozzles (18, 19, 20, 21) depending on the at least one process parameter of the compacting process.

13. Apparatus according to claim 12, **characterised in that** the open-loop and closed-loop control device (22) can be used to control the pump (17) for adding additives in liquid form, during which control the discharge amount of the additive in liquid form is predetermined depending on the at least one process parameter of the compacting process.

14. Apparatus according to claim 1, **characterised in that** the data processing device (24) of the open-loop and closed-loop control device (22) is configured to compare the setpoint of the specified specific energy consumption with the detected specific energy consumption and, depending on this result, initiate control of the apparatus (16) for adding additives.

15. Apparatus according to claim 1, **characterised in that** the apparatus can be implemented in combination with an agricultural tractor and drive machine, the open-loop and closed-loop control device (22) being configured to record a utilisation characteristic value of the agricultural tractor and drive machine via a data connection, and it being possible to use this utilisation characteristic value as a controlled variable for changing the conveying parameters of the apparatus (16) for adding additives and/or as a controlled variable for changing the conveying rate of the flow of stalk flowing to the feed hopper (9).

16. Apparatus according to claim 15, **characterised in that** the conveying rate of the flow of stalk material flowing towards the feed hopper (9) can be changed by changing the travel speed of the tractor and drive machine.

17. Apparatus according to claim 15 and claim 16, **characterised in that** in the conveying rate of the flow of crops flowing towards the feed hopper (9) can be changed by changing the travel speed of the tractor and drive machine, it being possible for this change to be initiated by the open-loop and closed-loop control device (22) depending on a process parameter of the compacting process.

## Revendications

1. Dispositif (1) pour compacter des produits fibreux en tige de type herbe, foin, paille ou biomasse analogue comprenant :
- au moins une paire de tambour de presse (6,7) qui se rejoignent par un mouvement de rotation opposé pour former une trémie d'entrée (9) pour les produits en tige, dans laquelle débouche une bande transporteuse pour l'alimentation en produits en tige,
- un dispositif d'entraînement pour entraîner les tambours de presse (6, 7) ainsi que les installations qui alimentent les tambours de presse (6, 7) en produits en tige,
- un dispositif (16) pour ajouter des additifs dans le flux de produits en tige arrivant dans la trémie d'entrée (9),
- une installation de commande et de régulation (22) comportant au moins un capteur pour saisir des paramètres de procédé de l'opération de compactage et qui est en outre conçu pour agir sur au moins un organe de réglage pour modifier au moins un paramètre du procédé,
- au moins ce capteur (S1, S2, S3) pour la saisie d'au moins un paramètre du procédé de l'opération de compactage étant conçu pour saisir les forces et couples appliqués pendant la phase de compactage sur les tambours de presse (6, 7), et
utiliser les forces et couples appliqués pendant l'opération de compactage sur les tambours de presse (6, 7) comme grandeurs de régulation pour modifier les paramètres de transfert du dispositif (16), pour ajouter des additifs et/ou applicables comme grandeurs de régulation pour modifier le débit du flux de produits en tige arrivant dans la trémie d'entrée (9), dispositif **caractérisé en ce que**
l'installation de commande et de régulation (22) comprend une installation de traitement de données (24) pour calculer une consommation spécifique d'énergie résultant du rapport de la quantité saisie dans la trémie d'entrée (9) des tambours de presse (6, 7) et des produits en tige fournis et indiquant la puissance motrice des tambours de presse (6, 7) se calculant à partir des couples saisis, et correspondant à une consommation d'énergie spécifique, souhaitée, correspondant à la tenue prédéfinie des granulés (pellets) à fabriquer comme valeur de consigne dans l'installation de traitement de données (24) de l'installation de commande et de régulation (22).

2. Dispositif selon la revendication 1,
**caractérisé en ce que**
au moins un capteur (S1, S2, S3) est prévu pour saisir les paramètres de procédé de l'opération de compactage, correspondant aux efforts appliqués entre les tambours de presse (6, 7) pendant l'opération de compactage.

3. Dispositif selon la revendication 1,
**caractérisé en ce que**
au moins un capteur (S1, S2, S3) convient pour saisir les paramètres du procédé de l'opération de compactage permettant de saisir les couples nécessaires, par l'entraînement des tambours de presse (6, 7) pour l'opération de compactage.

4. Dispositif selon au moins l'une des revendications 1 à 3,
**caractérisé en ce que**
comme additif, on ajoute au flux de produits en tige arrivant dans la trémie d'entrée (9), des liquides tels que de l'eau ou de la mélasse ou de l'huile.

5. Dispositif selon l'une des revendications 1 à 3,
**caractérisé en ce que**
comme additif au flux de produits en tige arrivant dans la trémie d'entrée (9) on utilise un liant pulvérisé.

6. Dispositif selon au moins l'une des revendications 4 ou 5,
**caractérisé en ce que**
la quantité d'additif ajoutée au flux de produits en tige arrivant dans la trémie d'entrée (9) dépend de la quantité de produits en tige arrivant sur les tambours de presse (6, 7).

7. Dispositif selon au moins l'une des revendications 1 à 6,
**caractérisé en ce que**
on saisit la quantité de produits en tige à fournir à la trémie d'entrée (9) des tambours de presse (6, 7) dans une zone en amont de la trémie d'entrée (9) des tambours de presse (6, 7).

8. Dispositif selon au moins l'une des revendications 1 à 7,
**caractérisé en ce que**
le dispositif (16) pour ajouter l'additif sous la forme liquide au flux de produits en tige arrivant dans la trémie d'entrée (9) comporte des buses dont les débits variables sont réglables.

9. Dispositif selon au moins l'une des revendications 1 à 7,
**caractérisé en ce que**
le dispositif (16) pour ajouter les additifs à l'état liquide aux produits en tige qui arrivent sur la trémie d'entrée (9) présente une disposition étagée de buses (18, 19, 20, 21), chaque buse (18, 19, 20, 21) étant réglée en fonction des différents volumes.

10. Dispositif selon la revendication 9,
**caractérisé en ce que**
le dispositif (16) pour ajouter les additifs à l'état liquide au flux de produits en tige arrivant dans la trémie d'entrée (9) comporte une disposition étagée de buses (18, 19, 20, 21), dont une ou plusieurs buses (18, 19, 20, 21) se commandent en fonction du débit volumique recherché.

11. Dispositif selon l'une des revendications 9 ou 10,
**caractérisé en ce que**
le dispositif (16) comporte deux réservoirs (14, 15, 23) reliés par un montage en parallèle avec une pompe (17).

12. Dispositif selon l'une des revendications 9 à 11,
**caractérisé en ce que**
l'installation de commande et de régulation (22) permet de commander la pompe (17) pour ajouter des additifs à l'état liquide, et en fonction d'au moins un paramètre de procédé de l'opération de compactage, en variante à partir d'au moins deux réservoirs (14, 15, 23) on fournit une quantité prédéfinie d'additif à l'état liquide à distribuer, à la disposition étagée de buses (18, 19, 20, 21).

13. Dispositif selon la revendication 12,
**caractérisé en ce que**
l'installation de commande et de régulation (22) permet de commander la pompe (17) pour ajouter les additifs à l'état liquide, la quantité à distribuer d'additif à l'état liquide se prédéfinissant en fonction d'au moins un paramètre de procédé de l'opération de compactage.

14. Dispositif selon la revendication 1,
**caractérisé en ce que**
l'installation de traitement de données (24) de l'installation de commande et de régulation (22) est conçue pour comparer la valeur de consigne de la consommation d'énergie spécifique, prédéfinie, est mise en relation avec la consommation d'énergie spécifique réellement saisie et en fonction de ce résultat, on commande le dispositif (16) pour ajouter les additifs à introduire.

15. Dispositif selon la revendication 1,
**caractérisé en ce que**
il est réalisé en combinaison avec une machine agricole de traction et d'entraînement, l'installation de commande et de régulation (22) étant conçue pour recevoir des caractéristiques de charge de la machine de traction et d'entraînement par une liaison de transmission de données et d'utiliser cette valeur caractéristique de charge comme grandeur de régulation pour modifier les paramètres de transfert du dispositif (16) pour l'ajout d'additif et/ou de grandeurs de régulation pour modifier le débit des produits en tige arrivant dans la trémie d'entrée (9).

16. Dispositif selon la revendication 15,
**caractérisé en ce que**
on modifie la quantité transférée du flux de produits en tige arrivant dans la trémie d'entrée (9) en modifiant la vitesse de circulation de la machine de traction et d'entraînement.

17. Dispositif selon les revendications 15 et 16,
**caractérisé en ce que**
on modifie le débit du flux de produits en tige arrivant dans la trémie d'entrée (9) en modifiant la vitesse de circulation de la machine de traction et d'entraînement, cette modification de l'installation de commande et de régulation (22) se réglant en fonction d'un paramètre de procédé de l'opération de compactage.
